# FASCICULE DE BREVET EUROPEEN

(11) **EP 1 590 396 B1**
(45) Date de publication et mention de la délivrance du brevet: **03.12.2008**
(21) Numéro de dépôt: 04705108.1
(22) Date de dépôt: 26.01.2004
(51) Int. Cl.: C08G 77/06, C08G 77/20

(54) **PROCEDE DE PREPARATION DES RESINES POLYMETHYLVINYLSILOXANES AVEC RECYCLAGE DES OLIGOORGANO SILOXANES VOLATILS**
VERFAHREN ZUR HERSTELLUNG VON POLYMETHYLVINYLSILOXANHARZEN MIT RÜCKFÜHRUNG FLÜCHTIGER OLIGOORGANOSILOXANE
METHOD FOR THE PRODUCTION OF POLYMETHYLVINYLSILOXANE RESINS WITH RECYCLING OF VOLATILE OLIGOORGANOSILOXANES

(30) Priorité: 05.02.2003 FR 0301342
(43) Date de publication de la demande: 02.11.2005
(73) Titulaire: Bluestar Silicones France, 69486 Lyon Cedex 03 (FR)
(72) Inventeur: GAMBUT-GAREL, Lucile, F-69003 Lyon (FR); ROCA-ORTEGA, José-Louis, F-38200 VIENNE (FR); DAHLER, Didier, F-69160 Tassin La Demi-Lune (FR); MIGNANI, Gérard, F-69008 Lyon (FR); ALLANDRIEU, Christian, F-69100 Villeurbanne (FR)
(86) Numéro de dépôt international: PCT/FR2004/050028
(87) Numéro de publication internationale: WO 2004/072149

(56) Documents cités:
- EP-A- 0 484 959
- EP-A- 1 013 698
- US-B1- 6 326 452

## Description

Le domaine de la présente invention concerne le domaine des résines silicones, en particulier de résines polyméthylvinylsiloxanes.

Plus précisément, la présente invention concerne un procédé de préparation de résines polyméthylvinylsiloxanes, dans lequel les composés silicones volatils produits lors de la fonctionnalisation de la résine sont recyclés.

Les résines polyméthylvinylsiloxanes sont notamment utilisées dans un système modulateur d'adhérence, dans des compositions silicones durcissables (notamment par polyaddition Si-H/SiVi) dans le domaine de l'anti-adhérence papier. De telles résines ont généralement pour fonction de permettre de régler la force de décollement des films anti-adhérents, obtenus par durcissement des compositions silicones.

La synthèse d'une résine polyméthylvinylsiloxane se déroule selon les étapes suivantes :
① Préparation et stabilisation de l'acide polysilicique au départ de silicate de sodium naturel. La stabilisation est réalisée en utilisant un alcool secondaire tel que l'alcool isopropylique en milieu acide HCl. Obtention d'une résine de type SiO_{4/2}, (Q) portant à sa surface des motifs SiOH (résine Q^{OH}).
② Fonctionnalisation des motifs SiOH de la résine Q, par des chlorosilanes et/ou disiloxanes fonctionnalisés ou non, en présence d'un solvant organique aprotique apolaire de type toluène, xylène.
③ Réarrangement de la structure résine sous l'action d'une base forte pour éliminer les silanols.

Un inconvénient de ce procédé est qu'à l'issu de l'étape de fonctionnalisation de motifs SiOH portés par la résine Q, une quantité importante d'oligosiloxanes, principalement des organosiloxanes linéaires ou "silox", sont produits à partir des chlorosilanes. Ces silox sont principalement l'hexaméthyldisiloxane (M₂), le pentaméthylvinyldisiloxane (MM^{Vi}), le tétraméthyldivinyl-disiloxane (M^{Vi}₂) et l'heptaméthylvinyltrisiloxane.
Ces sous-produits de réaction, qui ne sont pas utilisés, représentent un coût important. En effet, les organosiloxanes vinylés utilisés pour la fonctionnalisation coûtent cher. Aussi, les sous-produits obtenus après réaction sont généralement récupérés pour être retraités. Le coût de ce retraitement s'ajoute alors à celui des produits.

Des produits de réaction, tels que l'alcool isoproprylique, sont également présents en fin de réaction, dans des quantités non négligeables.

Les industries du domaine technique considéré sont donc dans l'attente d'un procédé de préparation de résine polyméthylvinylsiloxanes à l'issu duquel certains produits ou sous-produits de réaction récupérés sont présents dans une quantité limitée.

A titre d'illustration de l'arrière-plan technologique général, on peut citer le document EP-A-1 013 698 qui concerne un procédé de synthèse d'organosiloxanes cycliques de poids moléculaire élevé, comprenant des étapes de recyclage d'organosiloxanes cycliques volatiles de faible poids moléculaire et générés au cours de ladite synthèse.

L'objectif principal de la présente invention est donc de proposer un procédé de préparation de résines polyméthylvinylsiloxanes permettant de recycler au moins partiellement les sous-produits de type silox, produits durant l'étape de fonctionnalisation de la résine Q.
Un autre objectif de la présente invention est de fournir un procédé de préparation de résines polyméthylvinylsiloxanes, dans lequel le recyclage des sous-produits de type silox n'interfère pas sur les caractéristiques finales de la résine obtenue.

Ces objectifs parmi d'autres sont atteints par la présente invention qui concerne un procédé de préparation d'une résine polyorganosiloxane comportant au moins deux types de motifs siloxy différents R₃SiO_{1/2} (motif M) et SiO_{4/2} (motif Q, éventuellement Q^{OH}), caractérisé en ce qu'il comprend les étapes suivantes :
a. préparation d'une résine siloxane comportant des motifs Q, par hydrolyse acide d'un précurseur de résine siloxane, de préférence un silicate alcalin ;
b. fonctionnalisation de la résine siloxane obtenue à l'étape a), avec des halogénosilanes, en présence d'un solvant apolaire, cette fonctionnalisation générant des sous-produits comprenant des oligosiloxanes volatils (silox) ;
c. récupération des silox produits à l'étape b) en solution dans le solvant apolaire ; et
d. réarrangement de la résine fonctionnalisée à l'étape b), à l'aide d'une base forte pour éliminer les silanols;
   et en ce qu'au moins une partie des silox produits lors de l'étape b) et récupérés à l'étape c) sont recyclés.

Selon une caractéristique remarquable du procédé selon l'invention, le recyclage des silox consiste à utiliser à l'étape b) lesdits silox pour fonctionnaliser la résine polyorganosiloxane obtenue à l'étape a).

Durant l'étape a) du procédé, on introduit dans l'enceinte agitée de préparation, les produits suivants dans l'ordre suivant :
➢ un acide, de préférence HCl ;
➢ un silicate alcalin, de préférence le silicate de sodium ;
➢ un stabilisant/initiateur de liaisons hydrogène, de préférence constitué par de l'alcool isopropylique.

De façon préférentielle, la température dans l'enceinte réactionnelle au début de l'étape a) est inférieure à 25 °C, et de préférence comprise entre 2 et 15 °C.

Selon une variante de l'invention, le stabilisant/initiateur de liaisons hydrogène peut être également l'éthanol ou le butanol. Voir R.K. Iler, "The Chemistry of Silica", p. 291, éditeur J. Wiley and son, New York 1979.

Le silicate alcalin, jouant le rôle de précurseur de résine, se transforme en acide polysilicique en présence d'eau acidifiée à un pH ≤ 2. Cet acide forme un réseau de motifs Q.

Une fois la résine Q, éventuellement Q^{OH} formée, intervient l'étape b) de fonctionnalisation de cette dernière au moyen d'halogénosilanes ou oligosiloxanes dans le solvant apolaire.

De façon préférentielle, l'étape b) de fonctionnalisation consiste à mettre en oeuvre les opérations suivantes :
- introduire dans l'enceinte agitée de préparation, les produits suivants dans l'ordre suivant :
   ➢ les silox en solution dans un solvant apolaire, de préférence le xylène, comportant éventuellement de l'alcool isopropylique et de l'eau ;
   ➢ éventuellement un solvant apolaire, de préférence le xylène ;
   ➢ éventuellement des oligoorganosiloxanes ;
   ➢ les halogënosilanes ;
- chauffer à une température voisine de la température de reflux du stabilisant/initiateur de liaisons hydrogène, de préférence celle de l'alcool isopropylique comprise entre 70 et 80 °C ;
- éventuellement, ajouter du solvant apolaire ;
- éventuellement, refroidir ;
- séparer la phase aqueuse de la phase non aqueuse, de préférence par décantation ;
- éliminer la phase aqueuse ;
- récupérer la phase non aqueuse contenant la résine.

Cette fonctionnalisation entraîne une hydrophobisation de la résine, qui migre dans le solvant apolaire présent dans le milieu.

Le solvant apolaire utilisé est avantageusement le xylène. Il peut s'agir également du toluène, du white spirit, de l'hexane, du cyclohexane, de l'heptane, de l'Isopar^{®} K, de l'Isopar^{®} M, de l'Exxsol^{®} D60, du Rhodiasolv^{®} RPDE ou du cycloheptane.

De façon remarquable, la quantité en volume d'alcool isopropylique introduite dans l'enceinte réactionnelle est jusqu'à 50% en excès par rapport au volume d'acide chlorhydrique

De façon avantageuse, on peut en partie apporter la quantité nécessaire d'alcool isopropylique par la solution contenant les silox. En effet, il apparaît que la solution de silox dans le solvant apolaire comporte en outre une quantité résiduelle d'alcool isopropylique.

Selon une autre caractéristique remarquable, les halogénosilanes utilisés sont des chlorosilanes pris dans le groupe comprenant : le triméthylchlorosilane, le diméthylvinylchlorosilane, le méthylvinyldichlorosilane

Selon un mode de réalisation préféré, le rapport silox : halogénosilanes utilisé lors de l'étape de fonctionnalisation de la résine Q est inférieur ou égal à 2 et de préférence compris entre 0.25 et 1.

Après avoir récupéré la phase non aqueuse contenant la résine, il est judicieux de procéder à une distillation sous agitation de façon à récupérer au moins en partie les sous-produits de réaction constitués par les silox en solution dans le solvant apolaire, qui pourront être recyclés.

Cette distillation se fait préférentiellement à pression atmosphérique.

L'étape de réarrangement (ou avancement), consiste avantageusement à mettre en oeuvre les opérations suivantes :
- on introduit dans l'enceinte de préparation la base forte, de préférence KOH ;
- on chauffe à une température voisine de la température de reflux du mélange réactionnel ;
- on retire l'eau de condensation, ainsi que du solvant et des silox en solution dans le solvant apolaire qui pourront également être recyclés ;
- éventuellement on refroidit ;
- on ajoute un solvant apolaire, de préférence le xylène ;
- on neutralise la base forte avec un acide, de préférence l'acide acétique ;
- on élimine l'eau produite par distillation ;
- éventuellement, on sépare le produit de neutralisation, par filtration ;
- on récupère la solution non aqueuse de résine.

Cette étape de réarrangement permet de réduire le nombre de motifs SiOH résiduels, notamment par condensation et redistribution.

Selon une caractéristique préférée du procédé selon l'invention, les silox sont pris dans le groupe comprenant : l'hexaméthyldisiloxane, le pentaméthylvinyldisiloxane, le tétraméthyldivinyldisiloxane, l'heptaméthyl-3-vinyltrisiloxane.

Ainsi, un autre objet de l'invention concerne la résine telle qu'obtenue à partir du procédé.
De façon préférentielle, les groupements R de cette résine représentent indépendamment et au moins partiellement :
- des groupes alkyle, de préférence en C₁-C₁₈,
- des groupes alcényle en C₂-C₂₀, de préférence en C₂-C₁₂,
- de préférence au moins 80% molaire des radicaux R représentant un groupe méthyle,
- au moins 0,1% molaire, de préférence de 0,5 à 5% molaire des radicaux R représentant un groupe alcényle ou alcényloxyalkylène lié au silicium ("Si-alcényle"), le radical vinyle (Vi) étant particulièrement préféré à titre de R = alcényle;
   la résine contenant moins de 2,5 % (de préférence moins de 0,5%) molaire de fonctions silanol.

De façon remarquable, la résine polyorganosiloxane obtenue à partir du procédé présente une masse moléculaire moyenne en nombre compris entre 2500 et 5000 équivalents polystyrène.

Selon une variante de l'invention, la résine obtenue à partir du procédé selon l'invention comporte en outre des motifs siloxy D et/ou T, définis ci-dessous :
D : (R)₂ SiO_{2/2}
T : (R) SiO_{3/2}

Un autre objet de la présente invention concerne une composition silicone caractérisée en ce qu'elle comprend les silox récupérés à l'étape c) du procédé décrit supra en solution dans un solvant apolaire.

Selon un mode de réalisation préféré, la composition comprend :
- de 10 à 60 % de xylène ;
- de 10 à 30 % d'hexaméthyldisiloxane ;
- de 5 à 10 % de pentaméthylvinyldisiloxane ou d'heptaméthyl-3-vinyltrisiloxane ;
- de 0 à 3 % de tétraméthyldivinyldisiloxane ;
- de 10 à 50 % d'alcool isopropylique ;
- de 0 à 10% d'eau.

Un objet de la présente invention concerne l'utilisation des composés siloxanes récupérés à l'étape c) du procédé selon l'invention, pour la fonctionnalisation d'une résine polyorganosiloxane comportant au moins deux types de motifs siloxy différents R₃SiO_{1/2} (motif M) et SiO_{4/2} (motif Q).

Les exemples suivants sont donnés à titre indicatif et ne peuvent être considérés comme une limite du domaine et de l'esprit de l'invention.

### EXEMPLES :

Dans tous les exemples ci-dessous, les titres en matières sèches (MS) sont obtenus par évaporation, une heure à 150°C, à l'air, sur thermobalance de environ 3 g de solution xylénique vers 60%.

Les teneurs en Vi (M=27) et OH (M=17) sont déterminées par infrarouge sur les MS.

En Gel Permeation Chromatography (GPC) les masses moyennes Mₙ (en nombre) et M_{w} (en poids) sont exprimées en équivalent polystyrène ; les troncatures sont indiquées.

Les viscosités η sont établies à 25°C.

### Exemple 1: Essai n°1

### Etape a : hydrolyse/silylation

On introduit dans un réacteur de 3L double enveloppe équipé de 2 contre pales, d'un agitateur type impeller, d'un réfrigérant et d'une vanne de fond, 365 mL d'acide chlorhydrique à 16,2%.

On injecte à température ambiante successivement et sous agitation 840 tours/minute :
- en 5 minutes 805 mL de silicate de sodium liquide type 7 N 34 Rhodia préalablement dilué (600 mL d'eau + 400 mL de silicate),
   remarque : la température s'élève de 24 à 29°C
- 365 mL d'alcool isopropylique (IPA) en 3 minutes,
- 115 mL de xylène en 3 minutes,
- un mélange contenant 2,5 moles de triméthylchlorosilane et 0,6 mole de diméthylvinylchlorosilane en dix minutes.

La masse réactionnelle est portée une heure à reflux et on ajoute 175 mL de xylène pour extraire la résine. Après dix minutes de décantation, on écarte la solution aqueuse chlorhydrique pour isoler la solution xylènique de résine MM^{Vi}Q(OH) ; cette solution est abandonnée une nuit à température ambiante.

Les masses moyennes sont Mₙ = 3 480 et M_{w}= 8 300 (tronc 600-fin).

### Etape b : condensation

On charge dans un réacteur de 1L, 662,4 g de solution xylènique puis on distille sous agitation, à pression atmosphérique, une partie des composés volatils jusqu'à une température en masse de 138°C ; il ne reste alors plus que des traces d'acide chlorhydrique en solution qui contient environ de 33% de résine.

Après refroidissement, on ajoute, vers 100°C, 2 000 ppm de KOH à 50% dans l'eau.

La masse réactionnelle est porté 6 heures à reflux vers 140°C et sous agitation (960 tours/minute). L'eau de condensation est retirée au moyen d'un dispositif type Dean&Stark (DS) . En fin de réaction, on soutire le contenu du DS (environ 50 mL) contenant quelques mL de couche aqueuse.

Après refroidissement, on ajoute 50 mL de xylène et 1,1 équivalent d'acide acétique. L'eau formée est éliminée par distillation azéotropique vers le Dean&Stark en 45 minutes environ.

Le résidu solide d'acétate de potassium est séparé par filtration sur Primisil (ou Clarcel éventuellement), et on obtient après rinçages et dilution à 60%, une solution xylènique de résine contenant de 220 g de résine, avec η = 14,8 mm²/s. L'analyse GPC montre que les masses sont Mₙ = 4160 et M_{w} 8 850 (tronc 600-fin).La matière sèche contient 2,08 % de Vi et 0,15 % d'OH.

### Exemple 2 : Essai n°2

On opère, comme à l'exemple 1, mais en refroidissant à 2°C la solution d'HCl : en fin de coulée du silicate de sodium la température est de 13°C.

A l'issu de l'étape a) nous avons en GPC Mₙ= 2 510 et M_{w} 6 980 (tronc 500 -fin).

De façon similaire à l'étape b), on obtient une solution xylènique à 60% (η = 6,6 mm²/s) contenant environ 235g de résine sèche.

En GPC, on obtient Mₙ = 2 900 et M_{w} 5 370 (tronc 770 -fin).On dose sur la MS 2,45 % de Vi et 0,1 % d'OH.

### Exemple 3 : Essai n°3

On opère, comme à l'exemple 1, mais la température s'est élevée de 26 à 33°C.

De façon similaire à l'étape b), on obtient une solution xylènique à 60% (η = 21,2 mm²/s) contenant environ 210g de résine sèche.

On dose, sur la MS 2,03 % de Vi et 0,17 % d'OH.

### Exemple 4 : Essai n°4

On prépare de façon analogue à l'exemple 1, étape a), une résine MM^{Vi}Q(OH) à 35% de MS.

L'analyse GPC montre que les masses exprimées en équivalent polystyrène sont Mₙ = 3 780 et M_{w}= 8 860 (tronc 600 -fin) ; on dose sur la MS 2,4% d'OH et 2,2% de Vi.

Dans le réacteur de 1L, on concentre 657g de cette solution à 425g par distillation, puis on ajoute au résidu 2,46g de potasse à 50%.

La masse réactionnelle est maintenue environ 1,5 heure à reflux et la température masse diminue de 120 à 113°C car l'eau présente n'est pas éliminée.

On ajoute 50 mL de xylène et 1,45g d'acide acétique pour neutraliser la potasse. On adapte le dispositif de Dean&Stark pour écarter l'eau de neutralisation (1/2 heure de distillation à 120-140°C°).

On obtient après filtration et mise au titre à 60% une résine η = 7,3 mm²/s avec Mₙ= 2 040 et M_{w}=4 990 (tronc 600 - fin). On dose sur la MS 2,34 % de Vi et 0,7 % d'OH.

### Exemple 5 : Essai n °5 avec recyclage de silox

La composition CPG de la solution de silox à recycler est approximativement la suivante : eau 1,3%, IPA 14,1%, xylène 53%, triméthylsilanol 0,5%, hexaméthyldisiloxane ou M₂ 18%, pentaméthylvinyldisiloxane ou MM^{Vi} 10,8%, tétraméthyldivinyldisiloxane ou M₂^{Vi} 1,3%.

On introduit dans un réacteur double enveloppe de 3L équipé de contre pales, d'un agitateur type impeller, d'un réfrigérant et d'une vanne de fond, 365 mL d'acide chlorhydrique à 16,2%.Le contenu du réacteur et le silicate sont refroidis.

On injecte successivement sous une agitation de 840 tours/minute :
- en 3 minutes 800 mL de silicate de sodium liquide type 7 N 34 Rhodia préalablement dilué (600 mL d'eau + 400 mL de silicate) ; la température s'élève de 6 à 11°C,
- 294 mL d'alcool isopropylique en 1,5 minute,
- 395 g de silox + 8,1g de M₂ en 0,5 minute,
- 41 mL (0,3 mole) de diméthylvinylchlorosilane en 3 minutes,
- 158 mL (1,25 mole) de triméthylchlorosilane 142 mL en 6 minutes.

Le mélange est porté 1,5 heure à reflux (81°C) sous agitation puis, on ajoute 47 mL de xylène. La masse réactionnelle est décantée dix minutes, on écarte la solution aqueuse chlorhydrique pour conserver la solution xylènique de résine MM^{Vi}Q(OH) ; cette solution est abandonnée une nuit à température ambiante.

La condensation est poursuivie selon étape b) exemple 1. La solution xylènique de résine à 60% possède une viscosité η = 9,5 mm²/s ; elle contient 220g environ de résine sèche.

On dose sur la MS 2,21 % de Vi et 0,14 % d'OH.

### Exemple 6 : Impact de la température de fin de coulée du silicate de sodium

Des réactions ont été réalisées en engageant les mêmes quantités de réactifs qu'à l'exemple 1 et en faisant varier les températures d'hydrolyses. Les caractéristiques analytiques de la résine obtenue sans recyclage de silox et après traitement de celle-ci par 2000 ppm de potasse sont rassemblées dans le tableau 1.

**Tableau 1**

| **Essai** | **Températures initiales des réactifs** | **T (°C) Fin coulée silicate** | **Mₙ** | **η 60% mm²/s** | **%Vi (IR)** | **%OH (IR)** |
|---|---|---|---|---|---|---|
| **N°6** | HCl Silicate:2°C IPA : ambiante | 7 | 2005 | 7,4 | 2,5 | 0,1 |
| **N°7** | HCl:2°C silicate, IPA : ambiante | 13 | 2886 | 6,6 | 2,4 | 0,1 |
| **N°8** | HCl: 9°C silicate, IPA : ambiante | 18 | 3072 | 8,1 | 2,3 | 0,1 |
| **N°9** | HCl, silicate: 13°C IPA : ambiante | 20 | 3133 | 9,2 | 2,3 | 0,1 |
| **N°10** | HCl, silicate, IPA : 24°C | 29 | 3668 | 14,8 | 2,1 | 0,1 |
| **N°11** | HCl, silicate, IPA : 26°C | 33 | 3970 | 21,2 | 2,0 | 0,2 |

On constate que l'augmentation de la température en fin de coulée de silicate de sodium entraîne une augmentation de la viscosité de la résine et une diminution du taux de groupements vinyl.

D'autres essais ont été réalisés en engageant les mêmes quantités de réactifs qu'à l'exemple 5 avec recyclage de silox. Les résultats obtenus son regroupés dans le tableau 2 ci-dessous.

**Tableau 2**

| **Essai** | **T (°C) de Début/Fin de coulée** | **IPA pur** | **SiCl/silox** | **Mₙ M_{w} (PST)** | **η à 60% (mm².s⁻¹)** | **% Vi (IR)** | **% OH (IR)** |
|---|---|---|---|---|---|---|---|
| **N°12** | 6/11 | (1,5') | 50/50 (0,5') | 3330/5570 | 9,5 | 2,2 | 0,1 |
| **N°13** | 12/16 | (1,5') | 50/50 (0,5') | 3310/5730 | 11,3 | 2,1 | 0,1 |
| **N°14** | 2/19 | (2') | 50/50 (3') | 3380/5690 | 11,3 | 2,0 | 0,1 |
| **N°15** | 11/20 | (2') | 50/50 (3') | 3330/5570 | 11,1 | 2,0 | 0,2 |
| **N°16** | 10/23 | (2') | 50/50 (3') | 3400/5820 | 11,8 | 2,1 | 0,1 |

Si l'on constate que la viscosité des résines avec recyclage obtenues avec une température de fin de coulée basse ont une viscosité légèrement supérieure à celle des résines sans recyclage, on constate surtout que la viscosité des résines avec recyclage sont nettement moins affectées par les températures de fin de coulée du silicate de sodium que les viscosités des résines sans recyclage.

### Exemple 7: Effet du remplacement de l'isopropanol par l'azéotrope eau/isopropanol et effet de l'augmentation de la quantité d'isopropanol

Dans l'essai n° 17, l'isopropanol pur est remplacé par l'azéotrope eau/isopropanol (dosage par CPG normalisé à 100 : 72,7% d'alcool, 24,5% d'eau, 2,0% acétone et 0,6% toluène).

L'isopropanol (IPA) étant décrit dans la littérature comme un composé ralentissant la croissance de l'acide polysilicique, l'hypothèse a été que la viscosité des résines pourrait diminuer par augmentation de la quantité d'IPA sans avoir à atteindre des températures très basses. Des essais complémentaires ont été réalisés dans cet esprit en engageant les mêmes quantités de réactifs hors IPA que l'exemple 5. Les résultats sont regroupés dans le tableau 3 ci-dessous.

**Tableau 3**

| **Essais** | **T (°C) Début / Fin** | **IPA / eau : excès (excès calculé par rapport à la quantité donnée à l'exemple 5)** | **% silox** | **Mₙ,/ M_{w},** | **η à 60% mm²/s** | **%Vi (IR)** | **%OH (IR)** |
|---|---|---|---|---|---|---|---|
| **N°17** | 14/19 | Azéotrope : 0% | 50 | 3530/6040 | 12,2 | 2,0 | 0,1 |
| **N°18** | 14/19 | Azéotrope : +20% | 50 | 3110/4930 | 8,4 | 2,0 | 0,1 |
| **N°19** | 14/19 | Azeotrope+IPApur:+40% | 50 | 3110/4930 | 7,9 | 2,3 | 0,1 |

La résine obtenue lors de l'essai N°17 a une viscosité de 12,2 mm².s⁻¹ qui est supérieure à celle trouvée (11,3 mm²/s pour essai N°14) à température de fin de coulée de silicate de sodium identique et avec de l'isopropanol pur.

Nous notons que l'augmentation de la quantité d'IPA de 0 à 20 ou 40% permet de faire baisser la viscosité mais il y a peu de différence entre 20 et 40%.

### Exemple 8: Impact de la quantité de si/ox

En se plaçant dans des conditions favorables de température : 5°C en début de coulée de silicate et +20% d'IPA, plusieurs quantités de chlorosilanes et de silox ont été testés. Le nombre de mole d'agent silylant est de 0,6 mole pour la partie vinylée et 2,5 moles pour les groupements M qui peuvent être introduit sous forme de chlorosilanes ou de silox (M₂, MM^{Vi} ou M₂^{Vi}). Dans le tableau 4, les pourcentages correspondent à la répartition des agents silylant ou en part lorsque l'on ajoute plus que 0,6 mole de vinyl et de 2,5 moles de motifs M^{Vi} ou M.

**Tableau 4**

| **Essai** | **T (°C) Début/Fin** | **Chlorosilanes / silox** | **Mₙ / M_{w} (PST)** | **η 60% mm²/s** | **Vi (IR)** | **%OH (IR)** |
|---|---|---|---|---|---|---|
| **N°20** | 5/11 | 100% /0% | 2880 / 4210 | 8,0 | 2,5 | <0,1 |
| **N°21** | 5/10 | 60%/40% | 3030 / 4620 | 8,6 | 2,4 | <0,1 |
| **N°22** | 5/10 | 50%/50% | 3100 / 4880 | 8,5 | 2,2 | <0,1 |
| **N°23** | 5/10 | 50 parts/75 parts | 3140 / 5030 | 8,6 | 2,3 | <0,1 |
| **N°24** | 6/11 | 50 parts/ 100 parts | 3170 / 5030 | 8,7 | 2,4 | <0,1 |

A cette température de début de coulée du silicate, il y a une augmentation de 0,5 point de la viscosité entre l'utilisation de chlorosilanes purs et d'un mélange chlorosilanes/silox ce qui est très faible. L'augmentation de la quantité de silox à mole constante de vinyl introduit conduit à une diminution du taux de vinyl greffé dans des proportions faibles ce qui permet de rester dans les spécifications.

### Exemple 9 : Bilan des vinyls sans et avec recyclage des chlorosilanes

Un bilan des vinyls greffés sur la résine et hydrolysés (présent en solution avec la résine ou dans les silox issus de la concentration des résines, puis du traitement à la potasse et enfin de la neutralisation par l'acide acétique (encore appelée cohobation)) a été réalisé pour des essais sans recyclage et avec recyclage. Trois techniques analytiques ont été nécessaires : CPG, IR, éthoxylation ; les manques au bilan matière peuvent être imputables à la somme des incertitudes de mesure mais aussi au type de détection différent d'une méthode à l'autre.
➢ Essais sans recyclage des chlorosilanes (tableau 5) :

**Tableau 5**

| Essais | **Dans les volatils** mole de vinyl dosé par CPG | **En solution avec la résine** dosage par éthoxylation | **Sur la résine** mole de vinyl dosé par IR | **Bilan matière** |
|---|---|---|---|---|
| N°3 T fin coulée=33°C | 0,31 mole soit **51,6%** | 0,094 mole soit **15,6%** | 0,16 mole soit **26,6%** | **93,8%** |
| **N°21** T fin coulée=21°C | 0,242 mole soit **40,3%** | 0,061 mole soit **10,2%** | 0,21 mole soit **35%** | **85,5%** |
| **N°16** T fin coulée=11°C | 0,195 mole soit **32,5%** | 0,122 mole soit 20,3% | 0,214 mole soit **35,7%** | **88,5%** |

➢ Essais avec 50% de silox recyclés (tableau 6) :

**Tableau 6**

| **Essais** | **Dans les volatils** moles de vinyl dosé par CPG | **En solution avec la résine** dosage par éthoxylation | **Sur la résine** mole de vinyl dosé par IR | **Bilan matière** |
|---|---|---|---|---|
| **N°9** T fin coulée=20°C | 0,311 mole soit **51,8%** | 0,098 mole soit **16,3%** | 0,159 mole soit **26,5%** | **94,7%** |
| **N°17** T fin coulée=10°C | 0,308 mole soit **51,3%** | 0,086 mole soit **14,3%** | 0,181 mole soit **30,2%** | **95,8%** |

Pour les essais réalisés avec des chlorosilanes sans recyclage des silox, une augmentation du nombre de greffage est observée avec la diminution de la température en fin de coulée de silicate de sodium. Pour les essais avec recyclage des silox, on retrouve cette augmentation du greffage des fonctions vinyles sur la résine lorsque la température de fin de coulée du silicate est basse.

La diminution de la température en fin de coulée du silicate présente donc un intérêt sur le rendement de fonctionnalisation des chlorosilanes Me₂ViSiCl.

## Revendications

1. Procédé de préparation d'une résine polyorganosiloxane comportant au moins deux types de motifs siloxy différents R₃SiO_{1/2} (motif M) et SiO_{4/2} (motif Q, éventuellement Q^{OH}), **caractérisé en ce qu'**il comporte les étapes suivantes :
a) préparation d'une résine polyorganosiloxane comportant des motifs Q, à partir de silicate alcalin en milieu acide **caractérisé en ce que** durant l'étape a), on introduit dans l'enceinte agitée de préparation, les produits suivants dans l'ordre suivant :
➢ un acide, de préférence HCl ;
➢ un silicate alcalin, de préférence le silicate de sodium ;
➢ un stabilisant/initiateur de liaisons hydrogène, de préférence constitué par de l'alcool isopropylique,
b) fonctionnalisation de la résine siloxane obtenue à l'étape a), avec des halogénosilanes, en présence d'un solvant apolaire, cette fonctionnalisation générant des sous-produits comprenant des oligosiloxanes volatils (silox) ;
c) récupération des silox produits à l'étape b) ; et
d) réarrangement de la résine fonctionnalisée à l'étape b), à l'aide d'une base forte pour éliminer les silanes;
et **en ce qu'**au moins une partie des silox produits lors de l'étape b) et récupérés à l'étape c) sont recyclés.

2. Procédé selon la revendication précédente, **caractérisé en ce que** le recyclage des silox consiste à utiliser à l'étape b) lesdits silox pour fonctionnaliser la résine polyorganosiloxane obtenue à l'étape a).

3. Procédé selon l'une des revendications 2 ou 3, **caractérisé en ce que** durant l'étape b) l'on met en oeuvre les opérations suivantes :
• on introduit dans l'enceinte agitée de préparation, les produits suivants dans l'ordre suivant :
➢ les silox en solution dans un solvant apolaire, de préférence le xylène, comportant éventuellement de l'alcool isopropylique et de l'eau ;
➢ éventuellement un solvant apolaire, de préférence le xylène ;
➢ éventuellement des oligoorganosiloxanes ;
➢ les halogénosilanes ;
• on chauffe à une température voisine de la température de reflux du stabilisant/initiateur de liaisons hydrogène -de préférence celle de l'alcool isopropylique comprise entre 70 et 80°C- ;
• éventuellement, on ajoute du solvant apolaire ;
• éventuellement, on refroidit ;
• on sépare la phase aqueuse de la phase non aqueuse -de préférence par décantation- ;
• on élimine la phase aqueuse ;
• on récupère la phase non aqueuse, contenant la résine.

4. Procédé selon l'une des revendications précédentes, **caractérisé en ce que** la température dans l'enceinte réactionnelle au début de l'étape a) est inférieure à 25 °C et préférentiellement comprise entre 2 et 15 °C.

5. Procédé selon la revendication 3, **caractérisé en ce que** la quantité en volume d'alcool isopropylique introduit dans l'enceinte réactionnelle est jusqu'à 5% en excès par rapport au volume d'acide chlorhydrique.

6. Procédé selon l'une des revendication précédentes, **caractérisé en ce que** les halogénosilanes sont des chlorosilanes pris dans le groupe comprenant : le triméthylchlorosilane, le diméthylvinylchlorosilane, le méthylvinyldichlorosilane.

7. Procédé selon l'une des revendications précédentes, **caractérisé en ce que** le rapport silox : halogénosilanes est inférieur à 2 et de préférence compris entre 0,25 et 1.

8. Procécé selon l'une des revendications précédentes, **caractérisé en ce que** durant l'étape c) de réarrangement, on met en oeuvre les opérations suivantes ;
• introduit dans l'enceinte de préparation la base forte, de préférence KOH ;
• chauffe à une température voisine de la température de reflux du mélange réactionnel ;
• on retire l'eau de condensation, ainsi que du solvant et des silox en solution dans le solvant apolaire qui pourront également être recyclés ;
• evétuellement on refroidit ;
• ajoute un solvant apolaire, de préférence le xylène ;
• on neutralise la base forte avec un acide, de préférence l'acide acétique ;
• on élimine l'eau produite par distillation ;
• éventuellement, on sépare le produit de neutralisation, par filtration ;
• on récupère la solution non aqueuse de résine.

9. Procédé selon l'une des revendications précédentes, **caractérisé en ce que** les silox sont pris dans le groupe comprenant : l'hexaméthyldisiloxane, le pentaméthylvinyldi-siloxane, le tétraméthyldivinyldisiloxane, l'heptaméthyl 3-vinyltrisiloxane.

10. Résine polyorganosiloxane obtenue à partir du procédé selon l'une des revendications 1 à 9 **caractérisée en ce que** les groupements R représentent indépendamment et au moins partiellement :
- des groupes alkyle, de préférence en C₁-C₁₈,
- des groupes alcényle en C₂-C₂₀, de préférence en C₂-C₁₂,
- de référence au moins 80% molaire des radicaux R représentant un groupe méthyle,
- au moins 0,1% molaire, de préférence de 0,5 à 5% molaire des radicaux R représentant un groupe alcényle lié au silicium ("Si-alcényle"), le radical vinyle (Vi) étant particulièrement préféré à titre de R = alcényle;
la résine contenant moins de 2,5 % (de préférence moins de 0,5%) molaire de fonctions silanol.

11. Résine polyorganosiloxane selon la revendication 10, **caractérisée en ce qu'**elle présente un masse moléculaire moyenne en nombre comprise entre 2500 et 5000 équivalents polystyrène.

12. Résine polyorganosiloxane selon l'une des revendications 10 à 11, **caractérisée en ce qu'**elle comporte en outre des motifs D et/ou T.

13. Composition silicone, **caractérisée en ce qu'**elle comprend les silox récupérés à l'étape c) du procédé selon l'une des revendications 1 à 9, en solution dans un solvant apolaire, de préférence le xylène.

14. Composition selon la revendication précédente, **caractérisée en ce qu'**elle comprend :
- de 10 à 60 % de xylène ;
- de 10 à 30 % d'hexaméthyldisiloxane ;
- de 5 à 10 % de pentaméthylvinyldisiloxane ou d'heptaméthyl-3-vinyltrisiloxane;
- de 0 à 3 % de tétraméthyldivinyldisiloxane ;
- de 10 à 50 % d'alcool isopropylique ;
- de 0 à 10 % d'eau.

15. Utilisation des composés siloxanes récupérés à l'étape c) du procédé selon l'une des revendications 1 à 9, pour fonctionnaliser une résine polyorganosiloxane comportant au moins deux types de motifs siloxy différents R₃SiO_{1/2} (motif M) et SiO₂ (motif Q).

## Claims

1. Method of preparing a polyorganosiloxane resin having at least two different types of siloxy units, namely R₃SiO_{1/2} units (M units) and SiO_{4/2} units (Q, and possibly Q^{OH}, units), **characterized in that** it comprises the following steps:
a) preparation of a polyorganosiloxane resin comprising Q units, from an alkali metal silicate in acid medium, **characterized in that**, during step a), the following products are introduced, into the stirred preparation vessel, in the following order:
➢ an acid, preferably HCl;
➢ an alkali metal silicate, preferably sodium silicate; and
➢ a hydrogen bond initiator/stabilizer, preferably consisting of isopropyl alcohol.
b) functionalization of the siloxane resin obtained in step a) with halosilanes in the presence of an apolar solvent, this functionalization generating by-products comprising volatile oligosiloxanes (silox by-products);
c) recovery of the silox by-products that are produced in step b); and
d) rearrangement of the resin functionalized in step b) using a strong base in order to remove the silanes,
and **in that** at least some of the silox by-products produced during step b) and recovered in step c) are recycled.

2. Method according to the preceding claim, **characterized in that** the recycling of the silox by-products consists in using, in step b), said silox by-products to functionalize the polyorganosiloxane resin obtained in step a).

3. Method according to either of Claims 1 and 2, **characterized in that**, during step b), the following operations are carried out:
• introducing the following products into the stirred preparation vessel, in the following order:
➢ the silox by-products dissolved in an apolar solvent, preferably xylene, possibly comprising isopropyl alcohol and water,
➢ optionally, an apolar solvent, preferably xylene,
➢ optionally, oligoorganosiloxanes and
➢ the halosilanes;
• heating to a temperature close to the reflux temperature of the hydrogen bond initiator/stabilizer, preferably that of isopropyl alcohol, namely between 70 and 80°C;
• optionally, adding the apolar solvent;
• optionally, cooling;
• separating the aqueous phase from the nonaqueous phase, preferably by decanting;
• removing the aqueous phase; and
• recovering the nonaqueous phase containing the resin.

4. Method according to one of the preceding claims, **characterized in that** the temperature in the reaction vessel at the start of step a) is below 25°C and preferably between 2 and 15°C.

5. Method according to Claim 3, **characterized in that** the amount by volume of isopropyl alcohol introduced into the reaction vessel is up to 50% in excess relative to the volume of hydrochloric acid.

6. Method according to one of the preceding claims, **characterized in that** the halosilanes are chlorosilanes taken from the group comprising: trimethylchlorosilane, dimethylvinylchlorosilane and methylvinyldichlorosilane.

7. Method according to one of the preceding claims, **characterized in that** the silox/halosilane ratio is less than 2 and preferably between 0.25 and 1.

8. Method according to one of the preceding claims, **characterized in that**, during the rearrangement step c), the following operations are carried out:
• the strong base, preferably KOH, is introduced into the preparation vessel;
• the reaction mixture is heated to a temperature close to its reflux temperature;
• the water of condensation is removed, together with solvent and silox by-products dissolved in the apolar solvent, which by-products may also be recycled;
• optionally, the reaction mixture is cooled;
• an apolar solvent, preferably xylene, is added;
• the strong base is neutralized with an acid, preferably acetic acid;
• the water produced by distillation is removed;
• optionally, the neutralization product is separated by filtration; and
• the nonaqueous resin solution is recovered.

9. Method according to one of the preceding claims, **characterized in that** the silox by-products belong to the group comprising: hexamethyldisiloxane, pentamethylvinyldisiloxane, tetramethyldivinyldisiloxane and 3-heptamethylvinyltrisiloxane.

10. Polyorganosiloxane resin obtained by the method according to one of Claims 1 to 9, **characterized in that** the R groups represent, independently and at least partly:
- alkyl groups, preferably C₁-C₁₈ alkyl groups;
- C₂-C₂₀, preferably C₂-C₁₂ alkenyl groups;
- preferably at least 80 mol% of radicals R representing a methyl group; and
- at least 0.1 mol%, preferably 0.5 to 5 mol%, of radicals R representing an alkenyl group linked to the silicon ("Si-alkenyl"), the vinyl radical (Vi) being particularly preferred as R = alkenyl;
the resin containing less than 2.5 mol% (preferably less than 0.5 mol%) of silanol functional groups.

11. Polyorganosiloxane resin according to Claim 10, **characterized in that** it has a number-average molecular weight of between 2500 and 5000 polystyrene equivalents.

12. Polyorganosiloxane resin according to either of Claims 10 and 11, **characterized in that** it furthermore includes D and/or T units.

13. Silicone composition, **characterized in that** it includes the silox by-products recovered in step c) of the method according to one of Claims 1 to 9, in solution in an apolar solvent, preferably xylene.

14. Composition according to the preceding claim, **characterized in that** it comprises:
- 10 to 60% xylene;
- 10 to 30% hexamethyldisiloxane;
- 5 to 10% pentamethylvinyldisiloxane or 3-heptamethylvinyltrisiloxane;
- 0 to 3% tetramethyldivinyldisiloxane;
- 10 to 50% isopropyl alcohol; and
- 0 to 10% water.

15. Use of the siloxane compounds recovered in step c) of the method according to one of Claims 1 to 9 for functionalizing a polyorganosiloxane resin comprising at least two different types of siloxy units, namely R₃SiO_{1/2} units (M units) and SiO_{4/2} units (Q units).

## Patentansprüche

1. Verfahren zur Herstellung eines Polyorganosiloxan-Harzes, umfassend mindestens zwei verschiedene Arten von Struktureinheiten Siloxy R₃SiO_{1/2} (Struktureinheit M) und SiO_{4/2} (Struktureinheit Q, gegebenenfalls Q^{OH}) , **dadurch gekennzeichnet, dass** es die folgenden Stufen umfasst:
a) Herstellung eines Polyorganosiloxan-Harzes, umfassend Struktureinheiten Q, ausgehend von Alkalisilicat im sauren Medium, **dadurch gekennzeichnet, dass** man während der Stufe a) in den gerührten Herstellungsbehälter die folgenden Produkte in der nachstehenden Reihenfolge einträgt:
➢ eine Säure, vorzugsweise HCl;
➢ ein Alkalisilicat, vorzugsweise Natriumsilicat,
➢ einen Stabilisator/Initiator der Wasserstoffbindungen, vorzugsweise bestehend aus Isopropylalkohol;
b) Funktionalisierung des in der Stufe a) erhaltenen Siloxan-Harzes mit Halogensilanen in Anwesenheit eines apolaren Lösungsmittels, wobei diese Funktionalisierung Nebenprodukte erzeugt, die flüchtige Oligosiloxane (Silox) umfassen;
c) Gewinnung der in der Stufe b) erzeugten Silox; und
d) Umlagerung des in der Stufe b) funktionalisierten Harzes mit Hilfe einer starken Base, um die Silane zu entfernen;
und **dadurch**, dass mindestens ein Teil der in der Stufe b) erzeugten und in der Stufe c) gewonnenen Silox wiederverwendet werden.

2. Verfahren nach dem vorstehenden Anspruch, **dadurch gekennzeichnet, dass** das Recycling der Silox darin besteht, in der Stufe b) die genannten Silox für die Funktionalisierung des in der Stufe a) erhaltenen Polyorganosiloxan-Harzes zu verwenden.

3. Verfahren nach einem der Ansprüche 2 oder 3, **dadurch gekennzeichnet, dass** man während der Stufe b) die folgenden Operationen durchführt:
• man trägt in den gerührten Herstellungsbehälter die folgenden Produkte in der nachstehenden Reihenfolge ein:
➢ die Silox in Lösung in einem apolaren Lösungsmittel, vorzugsweise Xylol, umfassend gegebenenfalls Isopropylalkohol und Wasser;
➢ gegebenenfalls ein apolares Lösungsmittel, vorzugsweise Xylol:
➢ gegebenenfalls Oligoorganosiloxane;
➢ die Halogensilane;
• man erhitzt auf eine Temperatur von etwa der Rückflußtemperatur des Stabilisators/Initiators der Wasserstoffbindungen, vorzugsweise auf die von Isopropylalkohol, zwischen einschließlich 70 °C und 80 °C;
• man gibt gegebenenfalls apolares Lösungsmittel hinzu;
• man kühlt gegebenenfalls;
• man trennt die wässerige Phase von der nicht wässerigen Phase ab, vorzugsweise durch Dekantieren;
• man entfernt die wässerige Phase;
• man gewinnt die nicht wässerige Phase, die das Harz enthält.

4. Verfahren nach einem der vorstehenden Ansprüche, **dadurch gekennzeichnet, dass** die Temperatur in dem Reaktionsbehälter zu Beginn der Stufe a) unter 25 °C beträgt und vorzugsweise zwischen einschließlich 2 °C und 15 °C.

5. Verfahren nach Anspruch 3, **dadurch gekennzeichnet, dass** die Menge in Volumen von Isopropylalkohol, die in den Reaktionsbehälter eingetragen wird, bis zu 50 % im Überschuß beträgt, bezogen auf das Volumen der Chlorwasserstoffsäure.

6. Verfahren nach einem der vorstehenden Ansprüche, **dadurch gekennzeichnet, dass** die Halogensilane Chlorsilane sind, gewählt aus der Gruppe, die umfasst: Trimethylchlorsilan, Dimethylvinylchlorsilan, Methylvinyldichlorsilan.

7. Verfahren nach einem der vorstehenden Ansprüche, **dadurch gekennzeichnet, dass** das Verhältnis Silox : Halogensilane unterhalb von 2 liegt und vorzugsweise zwischen einschließlich 0,25 und 1 beträgt.

8. Verfahren nach einem der vorstehenden Ansprüche, **dadurch gekennzeichnet, dass** man während der Stufe c) der Umlagerung die folgenden Operationen durchführt:
• man trägt in den Herstellungsbehälter die starke Base ein, vorzugsweise KOH;
• man erhitzt auf eine Temperatur von etwa der Rückflußtemperatur der Reaktionsmischung;
• man zieht das Wasser der Kondensation ab, sowie das Lösungsmittel und die Silox in Lösung in dem apolaren Lösungsmittel, die ebenfalls wiederverwendet werden können;
• man kühlt gegebenenfalls;
• man gibt ein apolares Lösungsmittel hinzu, vorzugsweise Xylol;
• man neutralisiert die starke Base mit einer Säure, vorzugsweise Essigsäure;
• man entfernt das erzeugte Wasser durch Destillation;
• man trennt gegebenenfalls das Produkt der Neutralisation durch Filtration ab;
• man gewinnt die nicht wässerige Lösung des Harzes.

9. Verfahren nach einem der vorstehenden Ansprüche, **dadurch gekennzeichnet, dass** die Silox aus der Gruppe gewählt werden, die umfasst: Hexamethyldisiloxan, Pentamethylvinyldisiloxan, Tetramethyldivinyldisiloxan, Heptamethyl-3-vinyltrisiloxan.

10. Polyorganosiloxan-Harz, erhalten ausgehend von dem Verfahren nach einem der Ansprüche 1 bis 9, **dadurch gekennzeichnet, dass** die Gruppen R unabhängig und mindestens teilweise darstellen:
- Gruppen Alkyl, vorzugsweise mit 1 bis 18 Kohlenstoffatomen,
- Gruppen Alkenyl mit 2 bis 20 Kohlenstoffatomen, vorzugsweise 2 bis 12 Kohlenstoffatomen,
- vorzugsweise stellen mindestens 80 Mol-% der Reste R eine Methylgruppe dar,
- mindestens 0,1 Mol-%, vorzugsweise 0,5 bis 5 Mol-% der Reste R stellen eine Gruppe Alkenyl dar, gebunden an das Silicium ("Si-Alkenyl"), wobei der Rest Vinyl (vi) als R = Alkenyl besonders bevorzugt ist;
das Harz enthält weniger als 2,5 Mol-% (vorzugsweise weniger als 0,5 Mol-%) Silanolfunktionen.

11. Polyorganosiloxan-Harz nach Anspruch 10, **dadurch gekennzeichnet, dass** es eine mittlere Molekularmasse zahlenmäßig zwischen einschließlich 2500 und 5000 Äquivalenten Polystyrol aufweist.

12. Polyorganosiloxan-Harz nach einem der Ansprüche 10 bis 11, **dadurch gekennzeichnet, dass** es außerdem Struktureinheiten D und/oder T umfasst.

13. Siliconzusammensetzung, **dadurch gekennzeichnet, dass** sie die in Stufe c) des Verfahrens nach einem der Ansprüche 1 bis 9 gewonnenen Silox in Lösung in einem apolaren Lösungsmittel, vorzugsweise Xylol, umfasst.

14. Zusammensetzung nach dem vorstehenden Anspruch, **dadurch gekennzeichnet, dass** sie umfasst:
- 10 % bis 60 % Xylol,
- 10 % bis 30 % Hexamethyldisiloxan;
- 5 % bis 10 % Pentamethylvinyldisiloxan oder Heptamethyl-3-vinyltrisiloxan;
- 0 % bis 3 % Tetramethyldivinyldisiloxan;
- 10 % bis 50 % Isopropylalkohol;
- 0 % bis 10 % Wasser.

15. Verwendung der in Stufe c) des Verfahrens nach einem der Ansprüche 1 bis 9 gewonnenen Siloxanverbindungen für die Funktionalisierung eines Polyorganosiloxan-Harzes, das mindestens zwei verschiedene Arten von Struktureinheiten Siloxy R₃SiO_{1/2} (Struktureinheit M) und SiO₂ (Struktureinheit Q) umfasst.
